# EUROPÄISCHE PATENTSCHRIFT

(11) **EP 1 833 337 B1**
(45) Veröffentlichungstag und Bekanntmachung des Hinweises auf die Patenterteilung: **23.02.2011**
(21) Anmeldenummer: 05728186.7
(22) Anmeldetag: 08.03.2005
(51) Int. Cl.: A47J 31/44, A47J 31/06

(54) **KAFFEEMASCHINE**
COFFEE MACHINE
MACHINE A CAFE

(30) Priorität: 27.12.2004 DE 102004062746
(43) Veröffentlichungstag der Anmeldung: 19.09.2007
(73) Patentinhaber: BSH Bosch und Siemens Hausgeräte GmbH, 81739 München (DE)
(72) Erfinder: KRAMER, Siegmund, 83417 Kirchanschöring (DE); OSTERMAIER, Albert, 83371 Stein/Traun (DE)
(74) Vertreter: Dosterschill, Peter
(86) Internationale Anmeldenummer: PCT/EP2005/051024
(87) Internationale Veröffentlichungsnummer: WO 2006/069813

(56) Entgegenhaltungen:
- EP-A1- 0 307 497
- DE-A1- 19 545 111
- DE-A1- 19 945 833
- DE-T2- 60 004 013
- US-A1- 2003 056 655
- US-B1- 6 510 783

## Beschreibung

Die Erfindung betrifft eine Kaffeemaschine mit einer Heizeinrichtung zur Erhitzung von Wasser, mit einer Brühkammer zur Aufnahme eines Kaffeepads, in welche im Betrieb von der Heizeinrichtung erhitztes Wasser unter Druck von maximal 3 bar zugeführt wird, um Aromastoffe aus einer Kaffeemehl-Menge zu lösen, welche sich in einem im Betrieb in der Brühkammer angeordneten Kaffeepad befindet, und mit einem Auslauf für den dabei entstehenden Kaffee.

Kaffeemaschinen der eingangs genannten Art werden beispielsweise in der WO 01/15582 A1 oder der BP 1 050 248 A1 beschrieben. Die darin verwendeten "Kaffeepads" sind üblicherweise aus zwei am Rand miteinander verbundenen Filterpapierblättern gebildet, die in ihrem mittleren Bereich das Kaffeemehl einschließen. Ein solcher Kaffeepad wird einfach in die geöffnete Brühkammer der Pad-Kaffeemaschine eingelegt. Über einen Verriegelungsmechanismus wird dann die Brühkammer geschlossen. Anschließend wird mit einem Druck von maximal 3 bar heißes Wasser in die Brühkammer gedrückt und so auf verhältnismäßig schonende Weise die Aromastoffe sowie Farbstoffe aus dem Kaffeemehl gelöst, wobei der dabei entstehende Kaffee durch den Auslauf entnommen wird. Anschließend kann die Brühkammer wieder geöffnet und der gebrauchte Kaffeepad entsorgt werden. Solche "Pad-Kaffeemaschinen" erfreuen sich bei den Verbrauchern zunehmender Beliebtheit, da mit diesen Maschinen - anders als bei, den üblichen Haushalts-Kaffeemaschinen, bei denen dem in einem Kaffeefilter eingefüllten Kaffeemehl Wasser zugeführt wird und der fertige Kaffee dann durch den Kaffeefilter in eine Kanne tropft - nach Bedarf portions- bzw. tassenweise frischer Kaffee erzeugt werden kann.

Gegenüber den klassischen Espressomaschinen, bei der das Wasser mit einem Druck von bis zu 12 bar in die Brühkammer gedrückt wird, haben die Pad-Kaffeemaschinen den Vorteil einer erheblich einfacheren, schnelleren und komfortableren Bedienung sowohl bei der Vorbereitung für einen Brühvorgang als auch bei der anschließenden Entsorgung des gebrauchten Kaffees bzw. der Reinigung der Maschine. Zudem sind diese Geräte in der Regel erheblich platzsparender aufgebaut als klassische Espressomaschinen. Bei Verwendung von Kaffeepads mit einem Kaffeemehl der passenden Geschmacksnote kann mit einer solchen Maschine beispielsweise auch ein espressoartiger Kaffee erzeugt werden.

Die US 6,510,783 offenbart eine Maschine zur Bereitung von Espressokaffee, umfassend eine Aufnahmestruktur, die mindestens eine Aufgusskammer definiert, in Zusammenwirken mit Einrichtungen zur Abgabe von Wasser unter Druck und Einrichtungen zum sofortigen Heizen des Wassers, sowie einer Dampferzeugungseinrichtung_{.}

Es ist eine Aufgabe der vorliegenden Erfindung, eine Pad-Kaffeemaschine der eingangs genannten Art dahingehend weiterzuentwickeln, dass die Einsatzmöglichkeiten der Kaffeemaschine erweitert werden.

Diese Aufgabe wird durch eine Kaffeemaschine gemäß dem Patentanspruch 1 gelöst.

Erfindungsgemäß umfasst die Kaffeemaschine eine Heizeinrichtung zur Erhitzung von Wasser, eine Brühkammer zur Aufnahme eines Kaffeepads, in die von der Heizeinrichtung erhitztes Wasser zugeführt wird, um Aromastoffe aus einem in der Brühkammer angeordneten Kaffeepads zu lösen, einen Auslauf für den dabei entstehenden Kaffee und eine Dampferzeugungseinrichtung zur Bereitstellung von Dampf mit einem Dampfauslass, sowie ein der Heizeinrichtung nach-geschaltetes erstes Ventil, welches in einem ersten Schaltzustand die Verbindung von einem Ausgang der Heizeinrichtung zu der Brühkammer und in einem zweiten Schaltzustand die Verbindung von einem Ausgang der Heizeinrichtung zum Dampfabscheider oder zum Dampfauslass blockiert und durch ein zwischen dem Dampfabscheider und dem Dampfauslass angeordnetes zweites Ventil, wobei das erste Ventil mit dem zweiten Ventil gekoppelt ist.

Mit einer solchen erfindungsgemäßen Pad-Kaffeemaschine kann der Nutzer wie bei einer klassischen Espressomaschine heißen Dampf erzeugen und damit beispielsweise Milch aufschäumen, um außer dem üblichen Kaffee sowie einem espressoartigen Kaffee auch stilecht Cappuccino, Latte Macchiato o. Ä. zuzubereiten. Eine solche erfindungsgemäße Pad-Kaffeemaschine ist daher nicht nur komfortabler und einfacher in der Bedienung als eine klassische Espressomaschine, sondern bietet zudem auch den gesamten Funktionsumfang einer Espressomaschine, wodurch die Attraktivität einer Pad-Kaffeemaschine für den Benutzer erheblich erhöht wird.

Die Heizeinrichtung umfasst nach einer bevorzugten Ausführungsform der erfindungsgemäßen Kaffeemaschine einen Durchlauferhitzer. Die Verwendung des Durchlauferhitzers ist platzsparender als die übliche Verwendung einer Art Boiler, wie dies z. B. bei den bisher bekannten Pad-Kaffeemaschinen der Fall ist.

Hat die erfindungsgemäße Kaffeemaschine genau eine Heizeinrichtung, wie dies nach einer besonders bevorzugten Ausführungsform vorgesehen ist, dann wird für die Dampferzeugungseinrichtung dieselbe, jedoch in geeigneter Weise ansteuerbare Heizeinrichtung verwendet, wie zur Kaffeezubereitung.
Bei Verwendung genau einer Heizeinrichtung führt die Heizeinrichtung das erhitzte Wasser bevorzugt mit einem Druck von maximal 3 bar zu und/oder umfasst die erfindungsgemäße Kaffeemaschine eine Steuerungseinrichtung, mit der die Heizeinrichtung zumindest zwischen zwei Betriebszuständen umschaltbar ist, wobei die Heizeinrichtung in einem ersten Betriebszustand Wasser auf einen ersten Temperaturwert zur Kaffeezubereitung und in einem zweiten Betriebszustand Wasser auf einen zweiten Temperaturwert zur Erzeugung von Dampf erhitzt. Im ersten Betriebszustand erhitzt die Heizeinrichtung Wasser auf den ersten Temperaturwert von beispielsweise ca. 100°C zur Kaffeezubereitung, d.h. zum Überbrühen des Kaffeemehls. Im zweiten Betriebszustand wird durch die Heizeinrichtung Wasser auf den zweiten Temperaturwert von beispielsweise ca. 130° C erhitzt, um Dampf zu erzeugen.

Weitere vorteilhafte Ausgestaltungen der erfindungsgemäßen Kaffeemaschine sind in weiteren abhängigen Ansprüchen beschrieben.

Umfasst die Heizeinrichtung eine Pumpe, dann ist der Pumpe vorzugsweise eine Pumpensteuerung zugeordnet, welche derart ausgebildet ist, dass die Pumpe in einem Dampferzeugungs-Betriebszustand der Heizeinrichtung Wasser in einem vorgegebenen Takt zuführt. D.h. die Pumpe wird während der Dampferzeugung nicht die volle Zeit betrieben, sondern über die Steuerung in definierten Abständen an- und ausgeschaltet. Durch diese Taktung der Pumpe wird dafür gesorgt, dass im Durchlauferhitzer gleichmäßig Dampf erzeugt und ein Überhitzen des/der Heizkörper(s) des Durchlauferhitzers vermieden wird. Die Schaltzeiten werden besonders bevorzugt so gewählt, dass in etwa alle 3 s - 10 s, vorzugsweise alle 5 s, die Pumpe für ca. 0,3 s bis 1 s, vorzugsweise 0,6 s, betrieben wird.

Gemäß der erfindungsgemäßen Kaffeemaschine weist der Dampferzeuger einen der Heizeinrichtung nachgeschalteten Dampfabscheider auf. Ein solcher Dampfabscheider (bzw. Wasserabscheider) sorgt dafür, dass der Wasseranteil des üblicherweise aus der Heizeinrichtung kommenden Dampf-/Wassergemischs (d. h. des sogenannten "Nassdampfs") abgeschieden wird. Der verbleibende Dampfanteil, der durch den Dampfauslass entnommen werden kann, weist dann nur noch einen reduzierten Wassergehalt auf, d. h. es handelt sich um einen getrockneten Dampf. Somit wird zum einen die Gefahr reduziert, dass die Milch beim Aufschäumen überhitzt wird. Zum anderen kann die Kaffeemaschine - ohne dass dies zu einer Qualitätsverminderung bei der Dampferzeugung führt - mit einer einzigen Heizung ausgestattet werden, die für geringere Temperaturen ausgelegt ist. Dies ist sowohl bei der Herstellung der Kaffeemaschine als auch im laufenden Betrieb aufgrund der Energieersparnis kostengünstiger.

Ein solcher Dampfabscheider ist in bevorzugter Weise relativ einfach aus einer Kammer mit einer Einlassöffnung für das Dampf/Wasser-Gemisch, d. h. den Nassdampf, mit einer in einem oberen Bereich - vorzugsweise an der höchsten Stelle der Kammer - angeordneten Dampfablassöffnung und mit einer in einem unteren Bereich - vorzugsweise an der tiefsten Stelle der Kammer - angeordneten Wasserablassöffnung gebildet. Dabei befindet sich an oder in der Wasserablassöffnung ein Wasserablassventil, welches in Abhängigkeit von einem Wasserstand in der Kammer angesteuert wird. Besonders bevorzugt wird das Wasserablassventil durch einen in der Kammer angeordneten, mit dem Wasserablassventil gekoppelten Schwimmer gesteuert. Dieser Aufbau ist außerordentlich einfach und kostengünstig und benötigt keine externe Steuerung.

Bei einer besonders einfachen Variante besteht das Ventil im Wesentlichen aus einem Ventilkörper, beispielsweise einem Ventilkegel, einem Ventilteller oder dergleichen, welcher im geschlossenen Zustand des Ventils gegen einen in der Wasserabflussöffnung innenseitig angeordneten Ventilsitz drückt. Der Schwimmer kann dabei so in der Kammer geführt werden, dass er sich über dem Ventilkörper befindet und direkt mittels einer Schubstange oder dergleichen mit dem Ventilkörper gekoppelt ist. Sobald der Wasserspiegel unter ein bestimmtes Niveau sinkt, drückt der Schwimmer den Ventilkörper in den Ventilsitz. Oberhalb eines bestimmten Wasserspiegels hebt der Schwimmer den Ventilköper vom Ventilsitz ab. Bei einem ganz besonders kostengünstig und raumsparend aufgebauten Ausführungsbeispiel weist der Schwimmer an seinem unteren Ende einen integrierten Ventilkegelabschnitt auf, welcher mit einem in oder an der Wasserablassöffnung angeordneten Ventilsitz zusammenwirkt. Auf einen separaten Ventilkörper und eine Koppelung mit dem Schwimmer kann dann verzichtet werden.

Alternativ kann auch eine Koppelung über einen Hebelarm erfolgen, wobei durch die Ausgestaltung des Hebelarms die Kraft des Schwimmers auf den Ventilkörper eingestellt werden kann, um so die Kraft des Ventilkörpers, mit der dieser in den Ventilsitz drückt, und somit die Dichtigkeit des Ventils zu bestimmen.

Die Wasserablassöffnung ist bevorzugt mit einem Eingang der Heizeinrichtung, ggf. über ein Wasserreservoir der Kaffeemaschine und/oder über die Pumpe, beispielsweise mit dem Pumpenzulauf, verbunden, so dass das aus dem Dampfabscheider abgelassene Wasser der Heizeinrichtung wieder zugeführt wird.

Bei Verwendung einer gemeinsamen Heizeinrichtung zur Wassererhitzung für die Kaffeezubereitung und zur Dampferzeugung umfasst die Steuerungseinrichtung zur Einstellung, ob Dampf erzeugt wird bzw. ob Dampf durch den Dampfauslass abgegeben wird, ein der Heizeinrichtung nachgeschaltetes erstes Ventil, welches in einem ersten Schaltzustand die Verbindung von einem Ausgang der Heizeinrichtung zu der Brühkammer blockiert und in einem zweiten Schaltzustand die Verbindung von einem Ausgang der Heizeinrichtung zu dem Dampfabscheider und/oder dem Dampfauslass blockiert. Ggf. weist dieses Ventil auch einen dritten Schaltzustand auf, in dem es ganz geschlossen ist. Z. B. kann dieses Ventil einen Ventileingang aufweisen, welcher in einem ersten Schaltzustand mit einem ersten Ventilausgang verbunden ist, der mit der Brühkammer verbunden ist. In einem zweiten Schaltzustand kann dieser Ventileingang des Ventils dann mit einem zweiten Ventilausgang verbunden sein, der mit dem Dampfabscheider und/oder dem Dampfauslass verbunden ist.

Zur Steuerungseinrichtung gehört vorzugsweise auch eine geeignete Temperatursteuerung für die Heizeinrichtung, welche derart ausgebildet ist, dass die Heizeinrichtung in Abhängigkeit von der Betriebsart auf die passende Temperatur eingestellt wird. Außerdem weist die Steuerungseinrichtung dann vorzugsweise auch eine Pumpensteuerung auf, welche in einem Dampferzeugungs-Betriebszustand der Heizeinrichtung dafür sorgt, dass die Pumpe der Heizeinrichtung das Wasser im gewünschten Takt zuführt.

Die Temperatursteuerung und ggf. die Pumpensteuerung können dabei auch in einer Steuereinheit integriert sein. Über diese Steuereinheit kann beispielsweise, sofern es sich bei dem ersten Ventil um ein elektrisch bzw. elektronischansteuerbares Ventil handelt, auch das erste Ventil gesteuert werden. Alternativ ist es auch möglich, dass es sich bei dem ersten Ventil um ein mechanisch umschaltbares Ventil handelt und über einen Sensor die Ventilstellung erfasst wird, wobei ein Ventilstellungssignal der Steuereinheit zugeführt wird, die dann für die passende Temperatureinstellung und die passende Pumpenansteuerung sorgt.

Insbesondere bei Verwendung eines Dampfabscheiders kann es dazu führen, dass der erzeugte Dampf auch noch nach einem Umschalten des ersten Ventils aus dem Dampfauslass entweicht. Um dies zu vermeiden, befindet sich zwischen dem Dampfabscheider und dem Dampfauslass ein zweites Ventil, um die Leitung zwischen dem Dampfabscheider und dem Dampfauslass zu unterbrechen. Dieses zweite Ventil ist mit dem ersten Ventil gekoppelt, so dass das zweite Ventil geschlossen ist, wenn die Verbindung der Heizeinrichtung zum Dampfabscheider ebenfalls geschlossen ist. Dieses zweite Ventil kann mit dem ersten Ventil dabei derart gekoppelt sein, dass beide Ventile z. B. in einem gemeinsamen Ventilblock integriert sind und so gemeinsam geschaltet werden.

Am Dampfauslass kann prinzipiell eine beliebige Dampfauslassdüse (Cappuccino-Düse) verwendet werden. Besonders bevorzugt handelt es sich hierbei um eine sogenannte Venturi-Düse, bei der sich im Auslassrohr bzw. in der Düse unmittelbar vor dem Düsenausgang eine oder mehrere feine Bohrungen befinden, durch die beim Ausströmen von Dampf Milch angesaugt werden kann, welche dann wieder über den Dampfauslass abgegeben wird. Eine solche nach dem Venturi-Prinzip arbeitende Düse erleichtert das Aufschäumen von Milch.

Die Erfindung wird im Folgenden unter Hinweis auf die beigefügten Figuren anhand von Ausführungsbeispielen noch einmal näher erläutert. Dabei werden soweit wie möglich für gleiche Merkmale bzw. Komponenten die gleichen Bezugszeichen verwendet.

Es zeigen:
- Figur 1: eine schematische Darstellung der Komponenten und ihres Zusammenwirkens einer erfindungsgemäßen Pad-Kaffeemaschine gemäß einem ersten Ausführungsbeispiel;
- Figur 2: eine schematische Darstellung der Komponenten und ihres Zusammenwirkens einer erfindungsgemäßen Pad-Kaffeemaschine gemäß einem zweiten Ausführungsbeispiel;
- Figur 3: eine schematische Darstellung eines Dampfabscheiders gemäß einem ersten Ausführungsbeispiel;
- Figur 4: eine schematische Darstellung eines Dampfabscheiders gemäß einem zweiten Ausführungsbeispiel;
- Figur 5: eine perspektivische Außenansicht eines Ausführungsbeispiels einer erfindungsgemäßen Kaffeemaschine;
- Figur 6: ein vertikaler Teil-Längsschnitt durch eine Kaffeemaschine gemäß Figur 5;
- Figur 7: eine Ansicht der wesentlichen Komponenten zur Heißwasser- und Dampferzeugung sowie ihrer räumlichen Anordnung in einer Kaffeemaschine gemäß den Figuren 4 und 5 (Innenansicht der Kaffeemaschine von hinten mit abgenommenem Wassertank);

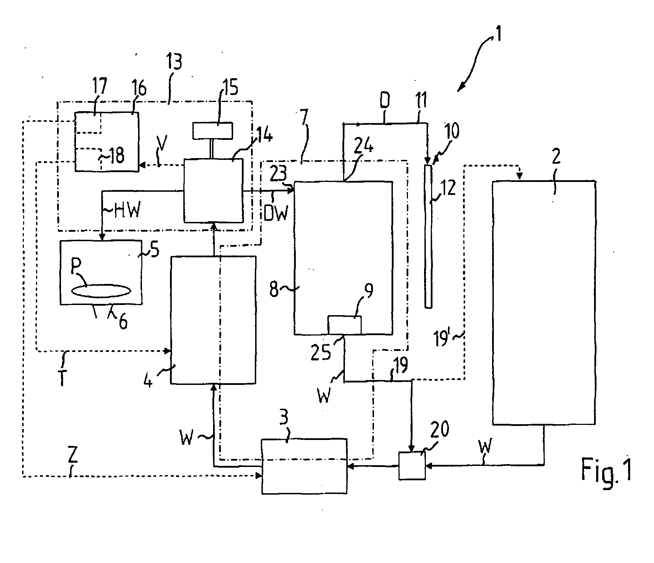

Das in Figur 1 in Form eines Funktionsschemas dargestellte erste Ausführungsbeispiel einer erfindungsgemäßen Kaffeemaschine 1 weist in herkömmlicher Weise einen Wassertank 2 auf, in welchem das zur Kaffeezubereitung und zur Dampferzeugung benötigte Wasser vom Benutzer eingefüllt wird. Von diesem Wassertank 2 aus kann mittels einer Pumpe 3 das Wasser zu einer Heizeinrichtung 4, hier einem Durchlauferhitzer 4, gepumpt werden.

Im Durchlauferhitzer 4 wird das Wasser erhitzt und kann in einem Kaffeezubereitungsmodus der Kaffeemaschine 1 in üblicher Weise als Heißwasser HW unter einem Druck von maximal 3 bar einer Brühkammer 5 zugeführt werden, in welcher sich ein Kaffeepad P befindet. Durch das heiße Wasser HW werden aus dem in dem Kaffepad P befindlichen Kaffeemehl Aromastoffe und Farbstoffe gelöst, wodurch der Kaffee entsteht. Der Kaffee kann dann über einen Auslauf 6 entnommen werden.

Neben diesen üblichen Komponenten weist die erfindungsgemäße Kaffeemaschine 1 eine Dampferzeugereinrichtung 7 auf, mit der heißer Dampf bereitgestellt werden kann. An dieser Dampferzeugereinrichtung 7 ist ein geeigneter Dampfauslass 10 angeordnet, hier bestehend aus einem Dampfrohr 11 und einer endseitig angeschlossenen Capuccino-Düse 12, um den Dampf D beispielsweise zum Aufschäumen von Milch zu entnehmen. Zusätzlich weist die Kaffeemaschine 1 eine Steuerungseinrichtung 13 auf, um zwischen dem Kaffeezubereitungsmodus und einem Dampferzeugungsmodus, in dem Dampf erzeugt wird, umstellen zu können. Die zur Dampferzeugungseinrichtung 7 gehörenden Komponenten sind in Figur 1 durch eine strich- punktierte Linie umschlossen, wobei einige der Komponenten, nämlich die Pumpe 3 und die Heizeinrichtung 4, nicht nur zur Dampferzeugung, sondern auch zur Aufbereitung des Heißwassers für die Kaffeezubereitung verwendet werden. Daher sind diese Komponenten 3, 4 nur teilweise der Dampferzeugungseinrichtung 7 zugeordnet. Neben diesen doppelt genutzten Funktionseinheiten, d. h. neben der Pumpe 3 und dem Durchlauferhitzer 4, weist die Dampferzeugungseinrichtung 7 noch einen Dampfabscheider 8 auf, welchem das von dem Durchlauferhitzer 4 kommende Dampf! Wasser-Gemisch DW zugeführt wird, damit der Dampfanteil D vom Wasseranteil W getrennt wird.

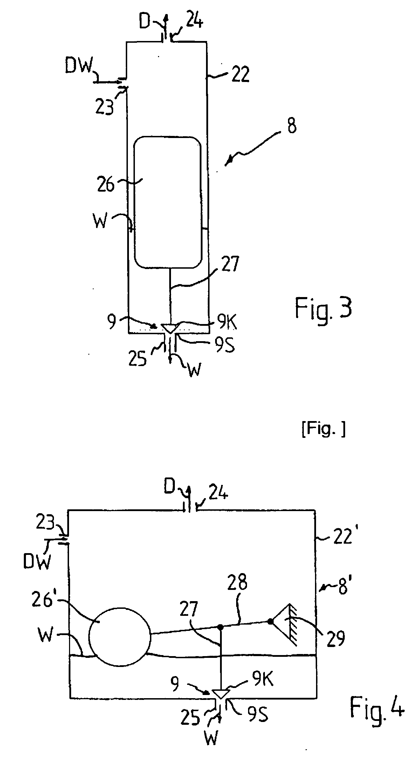

Das Funktionsprinzip einer einfachen Variante eines geeigneten Dampfabscheiders 8 ist aus Figur 3 zu ersehen. Der Dampfabscheider 8 besteht aus einer Kammer 22, welche an ihrer höchsten Stelle eine Dampfablassöffnung 24 aufweist, aus welcher der heiße Dampf D entweichen kann. An der Unterseite befindet sich an der tiefsten Stelle eine Wasserablassöffnung 25, durch die der Wasseranteil W die Kammer 22 wieder verlassen kann. In der Seitenwandung befindet sich eine Einlassöffnung 23 für das Dampf/Wasser-Gemisch DW. Die Kammer 22 des Dampfabscheiders 8 ist vorzugsweise zylindrisch aufgebaut und so ausgebildet, dass der Dampfabscheider.8 einen ausreichenden Druck aufnehmen kann. Der Druck im Dampfabscheider 8 kann im Betrieb bis zu 2 bar und mehr betragen. Die Wasserablassöffnung 25 wird durch ein Ventil 9 verschlossen. Dieses Ventil 9 wird über einen Schwimmer 26 gesteuert, welcher innerhalb der Kammer 22 angeordnet ist.

Das Ventil 9 besteht dabei im Wesentlichen aus einem Ventilkörper 9K, hier einem Ventilkegel 9K, welcher im geschlossenen Zustand des Ventils 9 gegen einen in der Wasserablassöffnung 25 innenseitig angeordneten Ventilsitz 9S drückt. Der Ventilkörper 9K ist in Figur 3 über eine Schubstange 27 mit dem darüber im in der Kammer 22 befindlichen Wasser W schwimmenden Schwimmer 26 gekoppelt. Sobald der Wasserspiegel unter ein bestimmtes Niveau absinkt, drückt der Schwimmer 26 den Ventilkörper 9K in den Ventilsitz 9S und das Ventil 9 ist geschlossen. Steigt der Wasserspiegel über eine bestimmte Höhe an, sorgt der Schwimmer 26 dafür, dass der Ventilkörper 9K vom Ventilsitz 9S abgehoben und das Wasserablassventil 9 geöffnet wird. Der Ventilkörper kann auch Teil des Schwimmers sein, d. h. der Schwimmer kann beispielsweise unten konisch ausgebildet sein, wobei dieses konische Unterteil mit einem entsprechend als Ventilsitz ausgebildeten, konischen ersten Abschnitt der Wasserablassöffnung zusammenwirkt.

Eine Variante eines Dampfabscheiders ist in Figur 4 dargestellt. Auch dieser Dampfabscheider 8' weist eine entsprechend druckfeste Kammer 22' mit einer obenseitigen Dampfablassöffnung 24, einer untenseitigen Wasserablassöffnung 25 sowie einer seitlichen Einlassöffnung 23 für das Dampf/Wasser-Gemisch DW auf. Die Kammer 22' des Dampfabscheiders 8' kann auch hier zylindrisch aufgebaut sein, kann aber beispielsweise auch quaderförmig oder in einer anderen Form aufgebaut sein. Auch bei diesem Ausführungsbeispiel befindet sich an der Wasserablassöffnung 25 ein Wasserablassventil 9' mit einem Ventilkörper 9K und einem Ventilsitz 95. Über eine Schubstange ist der Ventilkörper 9K wiederum mit einem Schwimmer 26' im Inneren der Kammer 22' gekoppelt, so dass, wenn der Schwimmer 26' durch ein Ansteigen des Wasserspiegels im Inneren der Kammer 22' nach oben gehoben wird, das Ventil 9' geöffnet wird und, wenn der Schwimmer 26' absinkt, der Ventilkörper 9K wieder in den Ventilsitz 9S gedrückt und das Wasserablassventil 9' geschlossen wird. Jedoch ist die Schubstange 27 hier nicht direkt mit dem Schwimmer 26' gekoppelt, sondern der Schwimmer 26' ist an einem Hebelarm 28 befestigt, der drehbar um eine horizontale Achse an einer fix in der Kammer 22 befestigten Halterung 29 gelagert ist. Die Schubstange 27 ist hierbei mit dem Hebelarm 28 gekoppelt. Sofern der Verbindungspunkt der Schubstange 27 zum Hebelarm 28 zwischen dem Schwimmer 26' und der Halterung 29 in der Kammer 22' an der richtigen Position liegt, kann der Schwimmer 26' eine größere Kraft auf den Ventilkörper 9K ausüben, so dass für einen - dichteren Abschluss des Wasserablassventils 25 gesorgt werden kann als bei dem Ausführungsbeispiel gemäß Figur 3. Eine Einstellung der Schließkraft ist möglich, indem z. B. die Lage des Schwimmers 26' entlang des Hebelarms 28 verändert wird. Der Nachteil dieser Konstruktion besteht jedoch indem größeren Raumbedarf. Daher wird für ein bevorzugtes Ausführungsbeispiel mit einem geringen Platzbedarf das in Figur 3 dargestellte Konzept genutzt.

Zusätzlich kann in der Kammer vor der Einlassöffnung 23 eine Art Prallplatte oder dergleichen angeordnet sein (in den Figuren nicht dargestellt), an der das durch die Einlassöffnung 23 kommende Dampf/Wasser-Gemisch DW auftrifft, so dass sich die im Dampf befindlichen Wassertropfen dort niederschlagen und dann nach unten in die Kammer 22, 22' abtropfen. Wenn sich genügend Wasser in der Kammer angesammelt hat, wird der Schwimmer 26, 26' angehoben und dann durch das Ventil 9, 9' geöffnet, so dass das Wasser den Dampfabscheider 8, 8' durch den Wasserablass 25 wieder verlässt.

Das durch die Wasserablassöffnung 25 abgelassene Wasser W wird wie in Figur 1 dargestellt über eine Leitung 19 an einem Verbindungsstück 20 wieder in die Leitung zwischen Wassertank 2 und Pumpe 3 geführt. Alternativ kann das Wasser W von der Wasserablassöffnung 25 auch über eine Leitung 19' wieder in den Wassertank 2 zurückgeleitet werden. Dies ist durch die gestrichelte Leitung 19' in Figur 1 dargestellt. Auf das Anschlussstück 20 kann in diesem Fall verzichtet werden.

Die Steuerungseinrichtung 13, mit der zwischen dem Kaffeezubereitungsmodus und dem Dampferzeugungsmodus umgestellt werden kann, besteht aus mehreren Komponenten 14, 15, 16, welche hier ebenfalls durch einen strichlinierten Block zusammengefasst sind. Kern dieser Steuerungseinrichtung 13 ist bei dem Ausführungsbeispiel gemäß Figur 1 ein 3/2-Wege-Ventil 14, welches von einem Benutzer mechanisch über einen Ventildrehschalter 15 verstellt werden kann. Dieses Ventil 14 hat drei Schaltstellungen. In einer ersten Schaltstellung ist der am Ausgang der Heizeinrichtung 4 angeschlossene Ventileingang mit einem ersten Ventilausgang verbunden, an welchen die Brühkammer 5 angeschlossen ist. In einer weiteren Schaltstellung ist der Ventileingang mit einem zweiten Ventilausgang verbunden, welcher mit der Einlassöffnung 23 des Dampfabscheiders 8 verbunden ist. In der mittleren Schaltstellung ist das Ventil geschlossen.

Weiterhin weist die Steuerungseinrichtung 13 eine elektronische Steuerungseinheit 16 auf, die als Komponenten eine Pumpensteuerung 17 und eine Temperatursteuerung 18 umfasst. Bei dieser Steuerungseinheit 16 kann es sich beispielsweise um einen Mikroprozessor, ASIC oder dergleichen handeln, wobei die Pumpensteuerung 17 und die Temperatursteuerung 18 in Form von Software realisiert sein können.

Es ist klar, dass die Kaffeemaschine einen Ein/Aus-Schalter sowie alle notwendigen Komponenten aufweist, um eine - über einen üblichen Stecker mittels eines Kabels zugeführte - Versorgungsspannung so umzuwandeln, dass hiermit die elektrischen Komponenten innerhalb der Kaffeemaschine versorgt werden können. Darüber hinaus kann die Maschine auch noch weitere bekannte Funktionseinheiten wie z. B. eine Betriebszustandsanzeige, eine Füllstandsanzeige, eine Verkalkungswarnleuchte, eine Warmhalteplatte, eine Druckanzeige etc. aufweisen. Solche üblichen Komponenten sind aber der Übersichtlichkeit wegen in Figur 1 nicht dargestellt.

Im Ventil 14 befindet sich ein geeignetes Messelement (nicht dargestellt), über welches die Schaltstellung des Ventilsl4 detektiert und ein geeignetes, die Ventilstellung repräsentierendes Ventilstellungssignal V an die elektronische Steuereinheit 16 übergeben bzw. von der elektronische Steuereinheit 16 abgegriffen werden kann.

Die Funktionsweise der Kaffeemaschine gemäß Figur 1 ist wie folgt:

In einer ersten Schaltstellung, im Kaffeezubereitungsmodus, wird Wasser W aus dem Wassertank 2 über die Pumpe 3 zum Durchlauferhitzer 4 gepumpt. Dieses Pumpen erfolgt kontinuierlich, d. h. die Pumpensteuerung 17 der elektronischen Steuereinheit 16 steuert die Pumpe 3 so an, dass die Pumpe 3 kontinuierlich Wasser in die Heizeinrichtung 4 drückt. Der Durchlauferhitzer 4 wird in diesem Kaffeezubereitungsmodus mittels eines von dem Heizungssteuerungsmodul 18 der elektronischen Steuereinheit 16 kommenden Temperatursignals T auf ca. 1000 C eingestellt. Im Ventil 14 wird dann das heiße Wasser HW zur Kaffeezubereitung in die Brühkammer 5 geleitet.

Nachdem der Benutzer über den Auslauf 6 den Kaffee entnommen hat, kann er das Ventil 14 mit Hilfe des Ventildrehschalters 15 in die zweite Schaltstellung umschalten, so dass der Ausgang der Heizeinrichtung 4 mit der Einlassöffnung 23 des Dampfabscheiders 8 verbunden ist. Die Änderung der Ventilstellung wird von der elektronischen Steuereinheit 16 registriert, welche daraufhin dafür sorgt, dass die Pumpensteuerung 17 mittels eines Zeitsteuersignals Z die Pumpe 3 in einem bestimmten Zeittakt schaltet, wobei ca. alle 5 s die Pumpe 3 für 0,6 s eingeschaltet wird. Gleichzeitig wird über die Temperatursteuerung 18 dafür gesorgt, dass der Durchlauferhitzer 4 auf ca. 130°C eingestellt wird. Das taktweise in den Durchlauferhitzer 4 einströmende Wasser W wird bei der Temperatur von 130 C verdampft und der Dampf gelangt dann über das Ventil 14 mit einem Restwasseranteil als Dampf/Wasser-Gemisch DW bzw. Nassdampf in den Dampfabscheider 8.

Im Dampfabscheider 8 wird der Nassdampf so weit wie möglich vom Wasseranteil W getrennt und der Dampf D kann dann aus der Dampfdüse 12 des Dampfauslasses 10 entnommen werden, um beispielsweise Milch aufzuschäumen.

Anschließend kann der Nutzer das Ventil 14 mittels des Ventildrehschalters 15 in die dritte Schaltstellung umschalten. In dieser Schaltstellung ist das Ventil 14 geschlossen. Diese Ventilstellung wird ebenfalls von der elektrischen Steuereinheit 16 ermittelt und dementsprechend wird von der Steuereinheit 16 dafür gesorgt, dass über die Pumpensteuerung 17 die Pumpe 3 abgeschaltet wird und über die Temperatursteuerung 18 der Durchlauferhitzer 4 ausgeschaltet wird. Es entweicht dann lediglich noch der im Dampfabscheider 8 befindliche Restdampf.

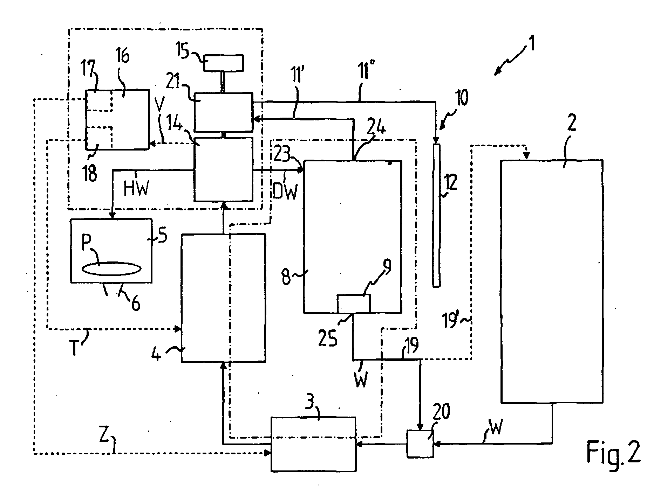

Um dies zu vermeiden, kann - wie in Figur 2 dargestellt - ein weiteres Ventil 21 genutzt werden. Die Kaffeemaschine 1 gemäß Figur 3 ist im Wesentlichen genauso aufgebaut wie die Kaffeemaschine nach Figur 1. Im Unterschied zur Kaffeemaschine gemäß Figur 1 weist diese Kaffeemaschine jedoch ein zur Steuerungseinrichtung 13 gehöriges zweites Ventil 21 auf, so dass durch die Steuerungseinrichtung 13 auch eingestellt werden kann, ob bereits im Dampfabscheider 8 bereitgestellter Dampf D durch den Dampfauslass 10 abgegeben wird. Dieses zweite Ventil 21 befindet sich zwischen der Dampfauslassöffnung 24 des Dampfabscheiders 8 und der Dampfdüse 12 der Dampfauslasseinrichtung 10. Anstelle eines einfachen Dampfrohrs 11 zur Düse 12 ist hierzu zunächst ein erstes Dampfableitungsstück 11' an der Dampfauslassöffnung 24 des Dampfabscheiders 8 angeordnet, welches zum Ventil 21 führt, und vom Ausgang des Ventils 21 führt dann schließlich ein Dampfrohr 11' zur Düse 12. Das zweite Ventil 21 ist hier so mit dem ersten Ventil 14 gekoppelt, dass das zweite Ventil 21 geschlossen ist, wenn sich das erste Ventil 14 in der dritten Schaltstellung befindet. Alternativ könnte das zweite Ventil 21 auch so aufgebaut und z. B. mit einem eigenen Schalter versehen sein, dass es unabhängig vom ersten Ventil 14 schaltbar ist.

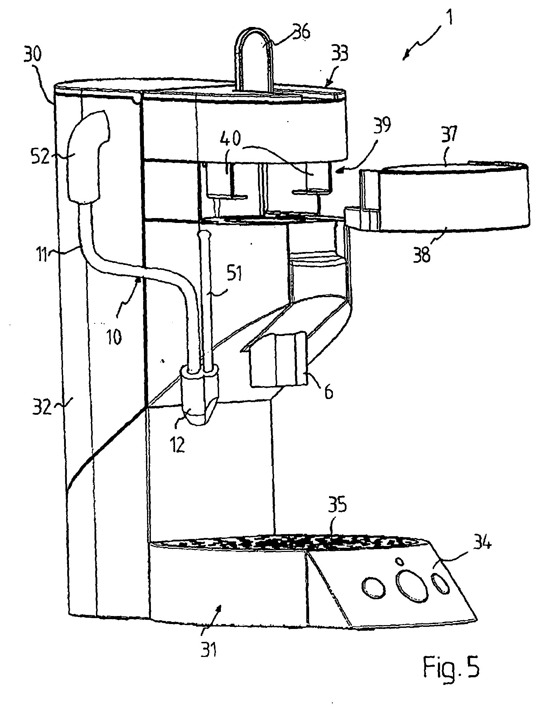

Der mechanische Aufbau und die räumliche Anordnung der Komponenten untereinander werden an einem Ausführungsbeispiel der erfindungsgemäßen Kaffeemaschine anhand der Figuren 5 bis 7 nachfolgend beschrieben.

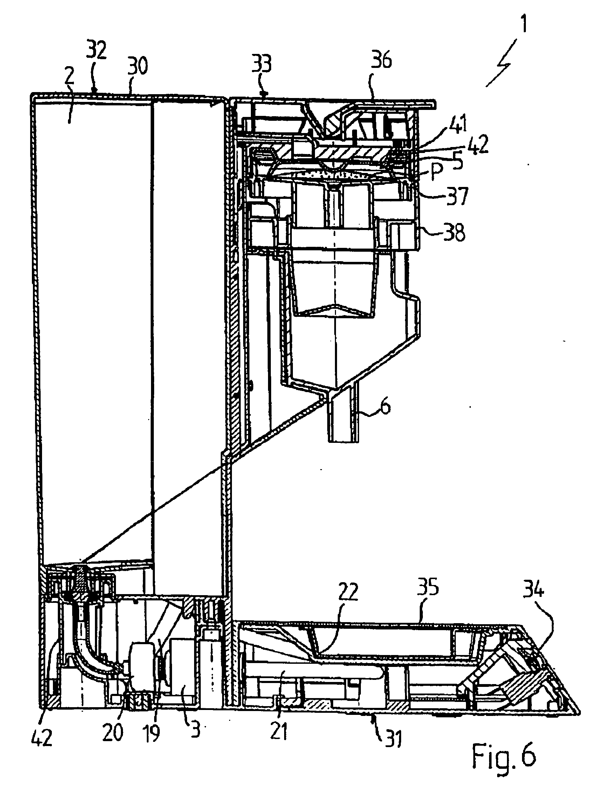

Wie insbesondere aus den Figuren 5 und 6 zu ersehen ist, weist die Kaffeemaschine 1 in dem dargestellten Ausführungsbeispiel ein flaches Vorderteil 31, eine säulenartige, hintere Baugruppe 32 und eine sich oberhalb des Vorderteils 31 von der säulenartigen hinteren Baugruppe 32 aus nach vorne erstreckende obere Baugruppe 33 auf.

Im oberen Teil der säulenartigen Baugruppe 32 befindet sich der Wassertank 2, der obenseitig durch einen Deckel verschlossen ist und nach Öffnen des Deckels von oben befüllt werden kann. Inder oberen Baugruppe 33 befindet sich die Brühkammer 5, in welche die Kaffeepads P eingesetzt werden können.

Die Kaffeepads P werden dabei in einen Pad-Halter 37 eingelegt, welcher sich in einer Schublade 38 befindet, die in einen Einschubbereich 39 in die obere Baugruppe 33 eingeschoben werden kann. Der Pad-Halter 37 bildet dabei den unteren Teil der Brühkammer. Im Einschubbereich 39 befinden sich Klammem 40, die - sobald die Schublade 38 in den Einschubbereich 39 eingeschoben ist - den Pad-Halter 37 untergreifen. Diese Klammem 40 sind mit einem an der Oberseite der oberen Baugruppe 33 hochschwenkbar gelagerten Spannhebel 36 gekoppelt, welcher in geöffnetem Zustand der Brühkammer, wie in Figur 6 dargestellt, nach oben geklappt ist. Wird dieser Spannhebel 36 nach vorne umgelegt, so werden die Klammem 40 nach oben gezogen und der Pad-Halter 37 wird somit mit dem eingelegten Kaffeepad P durch die Klammem 40 nach oben gegen ein Brühkammeroberteil 41 gedrückt. Dies ist in der Schnittbilddarstellung in Figur 6 zu erkennen. Wie dort zu sehen ist, weist das Brühkammeroberteil 41 eine umlaufende flexible Dichtung 42 auf, welche bei nach oben gezogenem Pad-Halter 37 ringförmig gegen den Boden des Pad-Halters 37 drückt, so dass zwischen dem innerhalb der Dichtung 42 befindlichen Bereich des Brühkammeroberteils 41 und dem Pad-Halter 37 die Brühkammer 5 gebildet wird, in welcher sich der Kaffeepad P befindet.

Unterhalb der Brühkammer ist an der Unterseite der oberen Baugruppe 33 über dem Vorderteil 31 ein Kaffeeauslass 6 angeordnet. Das Vorderteil 31 weist auf der Oberseite eine Abstellfläche 35 auf, auf der Tassen unter den Kaffeeauslass 6 gestellt werden können, um sie mit Kaffee zu befüllen. Die Abstellfläche 35, auf welcher die Tassen stehen, ist siebartig ausgebildet. Unter der Abstellfläche 35 befindet sich ein Auffangbehälter 22 für den Fall, dass Kaffee an der Kaffeetasse vorbeitropft oder noch Kaffee aus dem Auslauf 6 ausläuft, wenn der Benutzer bereits die Tassen weggenommen hat. Der Auffangbehälter 22 ist zur Reinigung entnehmbar. An der Vorderseite des Vorderteils 31 befindet sich ein Bedienfeld mit Kontrollleuchten sowie einem Schalter zum Ein- und Ausschalten der Kaffeemaschine.

Wie Figur 5 zeigt, ist an der einen Seite an der säulenartigen hinteren Baugruppe 32 im oberen Bereich ein Dampfauslassrohr 10 mit einer Düse 12 angeordnet. Das Dampfauslassrohr 10 läuft dabei in einem ersten Abschnitt zunächst vertikal nach unten, weist dann einen zweiten, seitlich von der säulenartigen Baugruppe 32 weg abgewinkelten, horizontalen Abschnitt auf und knickt dann wieder in einen vertikal nach unten verlaufenden, dritten Abschnitt ab. An einem am Gehäuse 2 der Kaffeemaschine 1 befestigten Anschlussstück 52 ist der obere, erste Abschnitt des Dampfrohrs 11 um eine vertikale Achse schwenkbar gelagert. Das Verschwenken kann, da das Dampfrohr 11 im Betrieb heiß ist, mit Hilfe eines an der Düse 12 befestigten Führungsstabs 51 erfolgen, der auch im Betrieb der Dampfdüse 12 weitgehend kalt bleibt.

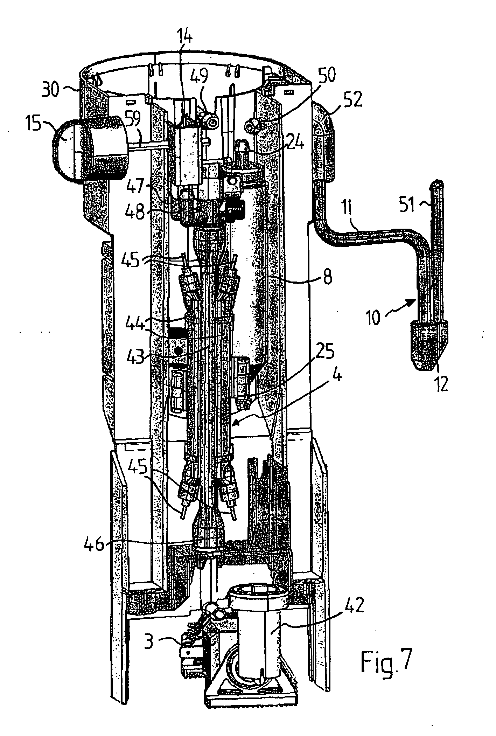

In dem in Figur 6 dargestellten Teil-Querschnitt ist erkennbar, dass unterhalb des im oberen, hinteren Teil der säulenartigen Baugruppe 32 befindlichen Wassertanks 2 ein Wassertankanschlussstutzen 42 angeordnet ist, über den das Wasser aus dem Wassertank 2 zu einer Pumpe 3 gelangt, die sich im vorderen, unteren Bereich der säulenartigen Baugruppe 32 befindet. Zwischen dem Wassertankanschlussstutzen 42 und der Pumpe 3 befindet sich ein Verbindungsstück 20, an dem über eine Leitung 19 das Wasser aus dem Dampfabscheider 8 wieder zum Pumpenzulauf 3 zurückgeleitet wird. Eine Leitung 21 führt von der Pumpe 3 durch das Vorderteil zurück nach oben zum Durchlauferhitzer 4, welcher sich in vertikaler Richtung in der säulenartigen Baugruppe 32 vor dem Wassertank 2 oberhalb der Pumpe 3 erstreckt. Diese Anordnung des Durchlauferhitzers 4 ist aus Figur 7 zu ersehen, welche den vorderen Teil der säulenartigen hinteren Baugruppe 32 von hinten betrachtet mit abgenommenem Wassertank 2 zeigt. Vom Durchlauferhitzer 4 gelangt das Wasser bei der Kaffeezubereitung über das Ventil 14 in die Brühkammer 5. Der fertige Kaffee tropft dann nach unten durch den Auslauf in eine auf dem Vorderteil 31 bereitgestellte Tasse 6.

In Figur 7 sind auch noch einmal die weiteren wesentlichen Komponenten zur Erzeugung des Kaffeewassers und zur Dampferzeugung dargestellt. Im vorderen unteren Bereich ist der Wassertankanschlussstutzen 42 gezeigt. Dahinter befindet sich die Pumpe 3. Oberhalb der Pumpe 3 ist der Durchlauferhitzer 4 angeordnet, welcher aus einem sich vertikal erstreckenden, zentralen Leitungsrohr 43 besteht, an dem an zwei Seiten Heizstäbe 44 angeordnet sind. Diese Heizstäbe 44 weisen jeweils oben und unten elektrische Kontakte 45 auf, an welche die notwendige Spannung angelegt wird, damit sich die Heizstäbe 44 aufheizen. Im Dampfbetrieb wird vorzugsweise nur einer der Heizstäbe 44 verwendet, um ein Überhitzen des Durchlauferhitzers 4 während der Dampferzeugung zu vermeiden. Grundsätzlich kann aber der Durchlauferhitzer 4 auch nur einen Heizstab oder auch mehr als zwei Heizstäbe aufweisen. Das Material des Leitungsrohrs 43 und die Verbindungsmaterialien zwischen den Heizstäben 44 und dem Leitungsrohr 43 sind so gewählt, dass möglichst viel Wärme an das Leitungsrohr 43 und das hindurchgepumpte Wasser abgegeben wird. Das Wasser wird während der Erwärmung von der Pumpe 3 von einem unten liegenden Durchlauferhitzer-Eingang 46 nach oben gepumpt.

Am oberen Ende befinden sich am Durchlauferhitzer 4 in dem dargestellten Ausführungsbeispiel zwei Ausgänge 47 und 48. Der eine Ausgang 47 ist über einen Schlauch mit einem Brühkammeranschlussstück 49 verbunden, welches von der säulenartigen, hinteren Baugruppe 32 aus in die vordere, obere Baugruppe 33 verläuft und dort zur Brühkammer führt. Der Verbindungsschlauch (hier nicht dargestellt) führt dabei durch ein Ventil 14, welches nachfolgend anhand von Figur 8 näher beschrieben wird. Der andere Ausgang 48 des Durchlauferhitzers führt ebenfalls durch dieses Ventil 14 und von dort in eine in dieser Figur nicht erkennbare, seitliche Einlassöffnung eines Dampfabscheiders 8, der hier parallel neben dem Durchlauferhitzer 4 angeordnet ist.

Der Durchlauferhitzer 8 weist eine Konstruktion auf, wie sie bereits anhand von Figur 3 schematisch erläutert wurde. Die untenseitige Wasserablassöffnung 25 ist über einen Schlauch mit dem in Figur 7 nicht erkennbaren Verbindungsstück 20 zwischen dem Wassertankanschlussstutzen 42 und der Pumpe 3 verbunden. Der Dampfauslass 24 am oberen Ende des Dampfabscheiders 8 ist über einen (nicht dargestellten) Schlauch mit einem Dampfrohranschluss 50 verbunden. Der Dampf D gelangt durch diesen Dampfrohranschluss 50 in das Dampfrohr 11 und von dort über die Düse 12 nach außen. Bei dem hier dargestellten Ausführungsbeispiel befindet sich zwischen der Dampfablassöffnung 24 des Dampfabscheiders 8 und dem Dampfauslass 10 kein weiteres Ventil, d. h. es handelt sich um eine Kaffeemaschine gemäß dem Aufbau nach Figur 1.

Bei dem in Figur 7 dargestellten Ventil 14 handelt es sich um ein besonders einfach und kostengünstig aufgebautes Schlauchventil, welches auf dem Prinzip beruht, dass zur Unterbrechung einer Leitung einfach ein Schlauchstück mechanisch abgeklemmt wird. Dieses Prinzip lässt sich aus einem Schnitt des Ventils 14 in Figur 8 ersehen. Das Ventil 14 besteht aus einem oben und unten offenen, rechteckigen Gehäuse 56, durch welches zwei Schlauchstücke 57, 58 geführt sind. Das eine Schlauchstück 57 verbindet den ersten Durchlauferhitzerausgang 47 mit dem Brühkammeranschlussstück 49 und das andere Schlauchstück 58 verbindet den zweiten Durchlauferhitzerausgang 48 mit der Einlassöffnung des Dampfabscheiders 8. Die beiden Schlauchstücke 57, 58 verlaufen dabei jeweils von unten nach oben parallel an den Innenseiten der Längswänden des Ventilgehäuses 56 entlang. Zwischen den beiden Schlauchstücken 57, 58 befinden sich flexible Abklemmlaschen 54, 55, welche in Abhängigkeit von der Stellung einer zwischen den Abklemmlaschen 54, 55 drehbar gelagerten Nockenscheibe 53 entweder nach außen in Richtung der benachbarten Längswand des Ventilgehäuses 56 gedrückt werden oder in einer parallel zu Längswand verlaufenden Stellung verbleiben.

Es wird abschließend noch einmal darauf hingewiesen, dass es sich bei den vorhergehenden, detailliert beschriebenen Kaffeemaschinen um Ausführungsbeispiele handelt, welche vom Fachmann in verschiedenster Weise modifiziert werden können, ohne den Bereich der Erfindung zu verlassen. Insbesondere können auch die konkreten Ausgestaltungen der Ventile in anderer Form als in der hier beschriebenen erfolgen. Ebenso kann der Durchlauferhitzer in einer anderen Form ausgestaltet werden, wenn dies aus Platzgründen bzw. Designgründen notwendig ist.

## Patentansprüche

1. Kaffeemaschine mit einer Heizeinrichtung (3, 4) zur Erhitzung von Wasser, einer Brühkammer (5) zur Aufnahme eines Kaffeepads (P), in die von der Heizeinrichtung (3, 4) erhitztes Wasser (HW) zugeführt wird, um Aromastoffe aus einem in der Brühkammer (5) angeordneten Kaffeepads (P) zu lösen, einen Auslauf (6) für den dabei entstehenden Kaffee, und einer Dampferzeugungseinrichtung (7) zur Bereitstellung von Dampf (7) mit einem Dampfabscheider und mit einem Dampfauslass (10),
**gekennzeichnet durch**
ein der Heizeinrichtung (3, 4) nachgeschaltetes erstes Ventil (14), welches in einem ersten Schaltzustand die Verbindung von einem Ausgang (47) der Heizeinrichtung (4) zu der Brühkammer (5) und in einem zweiten Schaltzustand die Verbindung von einem Ausgang (48) der Heizeinrichtung (4) zum Dampfabscheider (8) oder zum Dampfauslass (10) blockiert und **durch** ein zwischen dem Dampfabscheider (8) und dem Dampfauslass (10) angeordnetes zweites Ventil (21), wobei das erste Ventil (14) mit dem zweiten Ventil (21) gekoppelt ist.

2. Kaffeemaschine nach Anspruch 1, **dadurch gekennzeichnet, dass** die Heizeinrichtung einen Durchlauferhitzer (4) umfasst.

3. Kaffeemaschine nach Anspruch 1 oder 2, **dadurch gekennzeichnet, dass** die Kaffeemaschine (1) genau eine Heizeinrichtung (3, 4) aufweist.

4. Kaffeemaschine nach Anspruch 3, **dadurch gekennzeichnet, dass** der Brühkammer (5) von der genau einen Heizeinrichtung (3,4) das erhitzte Wasser (HW) unter einem Druck von maximal 3 bar zugeführt wird.

5. Kaffeemaschine nach Anspruch 3 oder 4, **dadurch gekennzeichnet, dass** die Kaffeemaschine (1) eine Steuerungseinrichtung (13) umfasst, mit der die genau eine Heizeinrichtung (3, 4) zumindest zwischen zwei Betriebszuständen umschaltbar ist, wobei die genau eine Heizeinrichtung (3, 4) in einem ersten Betriebszustand Wasser (W) auf einen ersten Temperaturwert zur Kaffeezubereitung und in einem zweiten Betriebszustand Wasser (W) auf einen zweiten Temperaturwert zur Erzeugung von Dampf (D) erhitzt.

6. Kaffeemaschine nach einem der Ansprüche 1 bis 5, **dadurch gekennzeichnet, dass** die Heizeinrichtung eine Pumpe (3) und eine der Pumpe (3) zugeordnete Pumpenansteuerung (17) umfasst, welche derart ausgebildet ist, dass die Pumpe (3) in einem Dampferzeugungs-Betriebszustand der Heizeinrichtung (4) Wasser (W) in einem vorgegebenen Takt zuführt.

7. Kaffeemaschine nach Anspruch 1-6, **dadurch gekennzeichnet, dass** der Dampfabscheider (8, 8') eine Kammer (22, 22') mit einer Einlassöffnung (23) für ein Dampf/Wasser-Gemisch (DW), mit einer in einem oberen Bereich der Kammer (22, 22') angeordneten Dampfablassöffnung (24) und mit einer in einem unteren Bereich der Kammer (22, 22') angeordneten Wasserablassöffnung (25) mit einem Wasserablassventil (9, 9') für die Wasserablassöffnung (25), welchesin Abhängigkeit von einem Wasserstand in der Kammer (22, 22') angesteuert wird.

8. Kaffeemaschine nach Anspruch 7, **dadurch gekennzeichnet, dass** der Dampfabscheider einen in der Kammer (22, 22') angeordneten Schwimmer (22, 26') aufweist, welcher mit dem Wasserablassventil (9, 9') gekoppelt ist.

9. Kaffeemaschine nach Anspruch 7 oder 8, **dadurch gekennzeichnet, dass** die Wasserablassöffnung (9) mit einem Eingang der Heizeinrichtung (4) verbunden ist, so dass das aus dem Dampfabscheider (8, 8') abgelassene Wasser (W) wieder der Heizeinrichtung (4) zugeführt wird.

## Claims

1. Coffee machine with a heating device (3, 4) for heating water, a brewing chamber (5) for receiving a coffee pad (P), into which water (HW) heated by the heating device (3, 4) is fed in order to release flavours from a coffee pad (P) arranged in the brewing chamber (5), an outlet (6) for the resulting coffee and a steam generating device (7) for providing steam (7), with a steam separator and a steam outlet (10), **characterised by** a first valve (14), which is downstream of the heating device (3, 4) and which in a first switching state blocks the connection from an outlet (47) of the heating device (4) to the brewing chamber (5) and in a second switching state blocks the connection from an outlet (48) of the heating device (4) to the steam separator (8) or the steam outlet (10), and by a second valve (21) arranged between the steam separator (8) and the steam outlet (10), wherein the first valve (14) is coupled with the second valve (21).

2. Coffee machine according to claim 1, **characterised in that** the heating device comprises a throughflow heater (4).

3. Coffee machine according to claim 1 or 2, **characterised in that** the coffee machine (1) comprises exactly one heating device (3, 4).

4. Coffee machine according to claim 3, **characterised in that** the brewing chamber (5) is fed by the exactly one heating device (3, 4) with the heated water (HW) at a pressure of at most 3 bars.

5. Coffee machine according to claim 3 or 4, **characterised in that** the coffee machine (1) comprises a control device (13) by which the exactly one heating device (3, 4) is switchable between at least two operating states, wherein the exactly one heating device (3, 4) in a first operating state heats water (W) to a first temperature value for coffee preparation and in a second operating state heats water (W) to a second temperature value for generation of steam (D).

6. Coffee machine according to any one of claims 1 to 5, **characterised in that** the heating device comprises a pump (3) and a pump drive control (17), which is associated with the pump (3) and which is so constructed that the pump (3) in a steam generating operating state of the heating device (4) feeds water (W) in a predetermined cycle.

7. Coffee machine according to claim 1-6, **characterised in that** the steam separator (8, 8') comprises a chamber (22, 22') with an inlet opening (23) for a steam/water mixture (DW), with a steam outlet opening (24) arranged in an upper region of the chamber (22, 22') and with a water outlet opening (25), which is arranged in a lower region of the chamber (22, 22'), with a water outlet valve (9, 9') for the water outlet opening (25), which valve is activated in dependence on a water state in the chamber (22, 22').

8. Coffee machine according to claim 7, **characterised in that** the steam separator comprises a float (22, 26') which is arranged in the chamber (22, 22') and with which the water outlet valve (9, 9') is coupled.

9. Coffee machine according to claim 7 or 8, **characterised in that** the water outlet (9) is connected with an inlet of the heating device (4) so that the water (W) let out of the steam separator (8, 8') is fed back to the heating device (4).

## Revendications

1. Machine à café comprenant un dispositif de chauffage (3, 4) destiné à échauffer de l'eau, une chambre d'infusion (5) destinée à loger une dosette de café (P), dans laquelle est amenée de l'eau échauffée (HW) par le dispositif de chauffage (3, 4) afin de détacher des substances aromatiques d'une dosette de café (P) disposée dans la chambre d'infusion (5), une sortie (6) pour le café ainsi produit, et un dispositif générateur de vapeur (7) destiné à préparer de la vapeur (7), comprenant un séparateur de vapeur et une sortie de vapeur (10)
**caractérisée par**
une première vanne (14) installée en aval du dispositif de chauffage (3, 4), laquelle, dans un premier état de commutation, bloque la liaison d'une sortie (47) du dispositif de chauffage (4) vers la chambre d'infusion (5) et, dans un second état de commutation, bloque la liaison d'une sortie (48) du dispositif de chauffage (4) vers le séparateur de vapeur (8) ou vers la sortie de vapeur (10), et par une seconde vanne (21) disposée entre le séparateur de vapeur (8) et la sortie de vapeur (10), la première vanne (14) étant couplée à la seconde vanne (21).

2. Machine à café selon la revendication 1, **caractérisée en ce que** le dispositif de chauffage comprend un chauffe-eau instantané (4).

3. Machine à café selon la revendication 1 ou 2, **caractérisée en ce que** la machine à café (1) présente exactement un dispositif de chauffage (3, 4).

4. Machine à café selon la revendication 3, **caractérisée en ce que** l'eau échauffée (HW) est amenée sous une pression de maximum 3 bars à la chambre d'infusion (5) par l'exactement un dispositif de chauffage (3, 4).

5. Machine à café selon la revendication 3 ou 4, **caractérisée en ce que** la machine à café (1) comprend un dispositif de commande (13) au moyen duquel l'exactement un dispositif de chauffage (3, 4) est commutable au moins entre deux états de fonctionnement, l'exactement un dispositif de chauffage (3, 4), dans un premier état de fonctionnement, échauffant l'eau à une première valeur de température pour la préparation du café et, dans un second état de fonctionnement, échauffant l'eau (W) à une seconde valeur de température pour générer de la vapeur (D).

6. Machine à café selon l'une quelconque des revendications 1 à 5, **caractérisée en ce que** le dispositif de chauffage comprend une pompe (3) et une commande de pompe (17) attribuée à la pompe (3), laquelle commande de pompe est réalisée de manière à ce que la pompe (3), dans un état de fonctionnement de génération de vapeur, amène de l'eau (W) dans une cadence prédéfinie au dispositif de chauffage (4).

7. Machine à café selon l'une quelconque des revendications 1 à 6, **caractérisée en ce que** le séparateur de vapeur (8, 8') présente une chambre (22, 22') comprenant une ouverture d'entrée (23) pour un mélange vapeur/eau (DW), comprenant une ouverture d'évacuation de vapeur (24) disposée dans une partie supérieure de la chambre (22, 22') et comprenant une ouverture d'évacuation d'eau (25) disposée dans une partie inférieure de la chambre (22, 22') et munie d'une vanne d'évacuation d'eau (9, 9') pour l'ouverture d'évacuation d'eau (25), laquelle est commandée en fonction d'un niveau d'eau dans la chambre (22, 22').

8. Machine à café selon la revendication 7, **caractérisée en ce que** le séparateur de vapeur présente un flotteur (22, 26') disposé dans la chambre (22, 22'), lequel est couplé à la vanne d'évacuation d'eau (9, 9').

9. Machine à café selon la revendication 7 ou 8, **caractérisée en ce que** l'ouverture d'évacuation d'eau (9) est raccordée à une entrée du dispositif de chauffage (4), de sorte que l'eau (W) évacuée hors du séparateur de vapeur (8, 8') est de nouveau amenée au dispositif de chauffage (4).
